(19) Europäisches Patentamt
European Patent Office
Office européen des brevets

(11) Publication number: **0 120 503**
**B1**

(12) # EUROPEAN PATENT SPECIFICATION

(45) Date of publication of patent specification: **01.04.87**

(51) Int. Cl.⁴: **C 08 F 210/16**, C 08 F 2/34

(21) Application number: **84103441.6**

(22) Date of filing: **28.03.84**

(54) **Preparation of low density, low modulus ethylene copolymers in a fluidized bed.**

(30) Priority: **29.03.83 US 480296**
**13.03.84 US 587005**

(43) Date of publication of application:
**03.10.84 Bulletin 84/40**

(45) Publication of the grant of the patent:
**01.04.87 Bulletin 87/14**

(84) Designated Contracting States:
**AT BE DE FR GB IT NL SE**

(56) References cited:
**GB-A-2 066 274**

(73) Proprietor: **UNION CARBIDE CORPORATION**
**39 Old Ridgebury Road**
**Danbury Connecticut 06817 (US)**

(72) Inventor: **Karol, Frederick John**
**Hiland Drive**
**Belle Mead, N.J. 08502 (US)**
Inventor: **Levine, Isaac Jacob**
**R. D. 1 43 Surrey Drive**
**Belle Mead, N.J. 08502 (US)**
Inventor: **George, Kathleen Frances**
**1001 Lynn Oaks Drive**
**Crosslanes, W.Va. 25313 (US)**

(74) Representative: **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

**EP 0 120 503 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a process for preparing very low density, low modulus ethylene copolymers in a fluidized bed. More particularly, this invention relates to a fluid bed process for preparing ethylene copolymers having a density of less than 0.91 g/cm$^3$ and a 1% secant modulus of less than 140,000 kPa.

Ethylene copolymers having a density of from 0.91 g/cm$^3$ to 0.96 g/cm$^3$ can be prepared in a fluidized bed as described in US—A—4,302,565 and 4,302,566 by continuously copolymerizing ethylene with one or more higher alpha olefin monomers by means of a catalyst composition prepared by (1) forming a precursor composition from a magnesium compound, titanium compound and electron donor compound, (2) diluting said precursor composition with an inert carrier material, and (3) activating the precursor composition with an organoaluminum compound. The copolymers prepared in accordance with these patents are relatively high modulus, stiff materials which are generally useful in the preparation of films and injection molded articles. However, these patents do not describe how low modulus copolymers having a density of less than 0.91 g/cm$^3$ can be prepared. Such low modulus copolymers would be useful in the preparation of tubing and hoses, and in other applications where flexibility and toughness are desirable.

When attempts have been made to produce low modulus ethylene copolymers having a density of less than 0.91 g/cm$^3$ by modifying the procedure of the aforementioned U.S. Patents, e.g., by increasing the concentration of higher alpha olefin comonomers in the reactor, it has been found that tacky, gummy polymer particles are produced. Because of their sticky character, such particles have a tendency to cohere to each other and form large agglomerates. After a short time these agglomerates reach a size too big to sustain fluidization in the reactor bed. As a result, polymerization comes to a halt after the production of only a small amount of the desired copolymer because of the reactor fouling caused by these large agglomerates.

GB—A—2 033 910 A, 2 034 336 A, 2 034 723 A and 2 066 274 A disclose the preparation of ethylene copolymers and terpolymers by the polymerization of monomeric olefin mixtures in vapor phase in the presence of a catalyst composition including (1) an organoaluminum compound and (2) a solid substance containing a magnesium-containing compound and a titanium compound and/or a vanadium compound. However, these references do not report the conditions required to avoid the reactor fouling caused by particle agglomeration when attempting to produce polymers having a density of less than 0.91 g/cm$^3$ in a fluidized bed so as to enable polymerization to proceed on a continuous basis at high polymer productivity. Furthermore, these references do not illustrate how polymerization can be effected without lengthy ball milling of the catalyst employed.

GB—A—2 006 232 A, 2 053 246 A and 2 053 935 A disclose the preparation of ethylene copolymers and terpolymers by the polymerization of monomeric olefin mixtures in a fluidized bed in the presence of a catalyst composition including (1) an organometallic component and (2) a titanium-containing component. However, these references likewise do not report the conditions required to avoid particle agglomeration and sustain polymerization on a continuous basis at high polymer productivity when attempting to produce polymers having a density of less than 0.91 g/cm$^3$. Furthermore, these references do not illustrate how polymerization can be effected without initially preparing a prepolymer.

In accordance with the present invention it has now been discovered that ethylene copolymers having a density below 0.91 g/cm$^3$ and a 1% secant modulus below 140,000 kPa can be continuously prepared by means of a fluidized bed polymerization process by continuously contacting, in such fluidized bed, at a temperature of from 10°C up to 80°C, a gaseous mixture containing (a) ethylene and at least one higher alpha olefin in a molar ratio of such higher alpha olefin to ethylene of from 0.35:1 to 8.0:1, and (b) at least 25 mol percent of a diluent gas, with particles of a catalyst composition prepared by forming a precursor composition from a magnesium compound, titanium compound, and electron donor compound; diluting said precursor composition with an inert carrier; and activating the diluted precursor composition with an organoaluminum compound.

Figure 1 is a graph of the 1% secant modulus of low modulus ethylene copolymers vs. reaction temperatures employed to copolymerize ethylene with higher alpha olefins, such as propylene or butene, by means of a fluid bed process employing the catalyst compositions of the present invention. The graph illustrates the operable polymerization temperatures which may be employed to produce ethylene copolymers of a given secant modulus without polymer agglomeration employing a gaseous mixture containing 50 mol percent of diluent gas and a reactor pressure of 2000 kPa. The region above the line is operable, while that below the line is inoperable.

Fluid bed reactors suitable for continuously preparing ethylene copolymers have been previously described and are well known in the art. Fluid bed reactors useful for this purpose are described, e.g. in US—A—4,302,565 and 4,302,566. Said patents likewise disclose catalyst compositions suitable for preparing such copolymers.

In order to produce ethylene copolymers having a density below 0.91 g/cm$^3$ by means of a fluid bed process, it is necessary to employ gaseous reaction mixtures containing higher amounts of higher alpha olefin comonomer vis-a-vis the amount of ethylene employed than are employed to produce copolymers having a density greater than 0.91 g/cm$^3$. By the addition of progressively larger amounts of such higher olefin to the mixture, copolymers having progressively lower densities are obtained at any given melt

index. The amount of higher olefin needed to achieve copolymers of a given density will vary from olefin to olefin, under the same conditions, with larger amounts of such higher olefin required as the number of carbon atoms in the olefin decreases. Generally, in order to produce copolymers having a density of less than 0.91 g/cm$^3$, it is necessary to employ reaction mixtures containing such higher olefin and ethylene in a molar ratio of higher olefin to ethylene of at least 0.35:1. Usually, mixtures containing such higher olefin and ethylene in a molar ratio of from 0.35:1 to 8.0:1 are employed for this purpose, with molar ratios of from 0.6:1 to 7.0:1 being preferred.

The higher alpha olefins which can be polymerized with ethylene to produce the low density, low modulus copolymers of the present invention contain from 3 to 8 carbon atoms. These alpha olefins should not contain any branching on any of their carbon atoms closer than two carbon atoms removed from the double bond. Suitable alpha olefins include propylene, butene-1, pentene-1, hexene-1, 4-methylpentene-1, heptene-1 and octene-1. The preferred alpha olefins are propylene, butene-1, hexene-1, 4-methylpentene-1 and octene-1.

If desired, one or more dienes, either conjugated or non-conjugated, may be present in the reaction mixture. Such dienes may be employed in an amount of from 0.1 mole percent to 10 mol percent of the total gaseous mixture fed to the fluid bed, preferably in an amount of from 0.1 mol percent to 8 mol percent. Such dienes may include, for example, butadiene, 1,4-hexadiene, 1,5-hexadiene, vinyl norbornene, ethylidene norbornene and dicyclopentadiene.

In order to prevent the formation of polymer agglomerates and sustain polymerization on a continuous basis when employing reaction mixtures containing the high ratios of higher alpha olefin comonomer to ethylene required to produce the desired copolymers having a density below 0.91 g/cm$^3$, it has been found necessary to dilute the reaction mixture with a large quantity of a diluent gas. Dilution of the reaction mixture with a diluent gas in this manner serves to reduce the tackiness of the polymers produced which is the main cause of such agglomeration. Ordinarily the diluent gas should make up at least 25 mol percent of the total gaseous mixture fed to the fluid bed in order to prevent such agglomeration. Preferably, the gaseous mixture contains from 33 mol percent to 95 mol percent of such gas, most preferably from 40 mol percent to 70 mol percent. By a "diluent" gas is meant a gas which is nonreactive under the conditions employed in the polymerization reactor, i.e., does not decompose and/or react with the polymerizable monomers and the components of the catalyst composition under the polymerization conditions employed in the reactor other than to terminate polymer chain growth. In addition, such gas should be insoluble in the polymer product produced so as not to contribute to polymer tackiness. Among such gases are nitrogen, argon, helium, methane and ethane.

Hydrogen may also be employed as a diluent gas. In this event, the diluent serves not only to dilute the reaction mixture and prevent polymer agglomeration, but also acts as a chain transfer agent to regulate the melt index of the copolymers produced by the process. Generally, the reaction mixture contains hydrogen in an amount sufficient to produce a hydrogen to ethylene mole ratio of from 0.01:1 to 0.5:1. In addition to hydrogen, other chain transfer agents may be employed to regulate the melt index of the copolymers.

The gaseous reaction mixture should, of course, be substantially free of catalyst poisons, such as moisture, oxygen, carbon monoxide, carbon dioxide and acetylene.

In addition to diluting the reaction mixture with a diluent gas, it has also been found necessary to maintain a relatively low temperature in the reactor in order to prevent polymer agglomeration and sustain polymerization on a continuous basis. The temperature which can be employed varies directly with the concentration of diluent gas present in such mixture, with higher concentrations of diluent gas permitting the use of somewhat higher temperatures without adverse effects. Likewise, the lower the concentration of the higher alpha olefin comonomer in the reaction mixture vis-a-vis the ethylene concentration, i.e., the higher the density and modulus of the copolymer being produced, the higher the temperature which can be employed. Generally, however, in order to continuously produce copolymers having a density below 0.91 g/cm$^3$ and a 1% secant modulus below 140,000 kPa while at the same time preventing polymer agglomeration, the temperature should not be permitted to rise above 80°C. On the other hand, the temperature employed must be sufficiently elevated to prevent substantial condensation of the reaction mixture, including diluent gas, to the liquid state, as such condensation will cause the polymer particles being produced to cohere to each other and likewise aggravate the polymer agglomeration problem. This difficulty is normally associated with the use of alpha olefins having 5 or more carbon atoms which have relatively high dew points. While some minor condensation is tolerable, anything beyond this will cause reaction fouling. Usually temperatures of from 10°C to 60°C are employed to produce copolymers having a density of from 0.86 g/cm$^3$ to 0.90 g/cm$^3$ and a secant modulus of from 600 kPa to 100,000 kPa. More elevated temperatures of from 60°C up to 80°C are ordinarily employed in the production of copolymers having a density of from 0.90 g/cm$^3$ up to 0.91 g/cm$^3$ and a 1% secant modulus of from 100,000 kPa up to 140,000 kPa. Figure 1 illustrates the maximum polymerization temperatures which may be employed to produce ethylene copolymers of a given secant modulus without polymer agglomeration when the reaction mixture is diluted with 50 mol percent of a diluent gas. The region above the line is operable, while that below the line is inoperable.

Pressures of up to about 7000 kPa are employed in the process, although pressures of from about 70 kPa to 2500 kPa are preferred.

In order to maintain a viable fluidized bed, the superficial gas velocity of the gaseous reaction mixture

through the bed must exceed the minimum flow required for fluidization, and preferably is at least 6.1 cm (0.2 feet) per second above the minimum flow. Ordinarily the superficial gas velocity does not exceed 152.4 cm (5.0 feet) per second, and most usually no more than 76.2 cm (2.5 feet) per second is sufficient.

The catalyst compositions employed in the process of the present invention are produced by forming a precursor composition from a magnesium compound, titanium compound, and electron donor compound; diluting said precursor composition with an inert carrier; and activating the diluted precursor composition with an organoaluminum compound.

The precursor composition is formed by dissolving at least one titanium compound and at least one magnesium compound in at least one electron donor compound at a temperature of from about 20°C up to the boiling point of the electron donor compound. The titanium compound(s) can be added to the electron donor compound(s) before or after the addition of the magnesium compound(s), or concurrent therewith. The dissolution of the titanium compound(s) and the magnesium compound(s) can be facilitated by stirring, and in some instances by refluxing, these two compounds in the electron donor compound(s). After the titanium compound(s) and the magnesium compound(s) are dissolved, the precursor composition may be isolated by crystallization or by precipitation with an aliphatic or aromatic hydrocarbon containing from 5 to 8 carbon atoms, such as hexane, isopentane or benzene. The crystallized or precipitated precursor composition may be isolated in the form of fine, free-flowing particles having an average particle size of from about 10 μm to about 100 μm after drying at temperatures up to 60°C.

About 0.5 mol to about 56 mols, and preferably about 1 mol to about 10 mols, of the magnesium compound(s) are used per mol of the titanium compound(s) in preparing the precursor composition.

The titanium compound(s) employed in preparing the precursor composition has the structure

$$Ti(OR)_aX_b$$

wherein

R is an aliphatic or aromatic hydrocarbon radical containing from 1 to 14 carbons atoms, or COR′ where R′ is an aliphatic or aromatic hydrocarbon radical containing from 1 to 14 carbon atoms,

X is selected from the group consisting of Cl, Br, I, and mixtures thereof,

a is 0, 1 or 2, b is 1 to 4 inclusive, and a+b=3 or 4.

Suitable titanium compounds include $TiCl_3$, $TiCl_4$, $Ti(OCH_3)Cl_3$, $Ti(OC_6H_5)Cl_3$, $Ti(OCOCH_3)Cl_3$ and $Ti(OCOC_6H_5)Cl_3$. $TiCl_3$ is preferred because catalysts containing this material show higher activity at the low temperatures and monomer concentrations employed in the process of the present invention.

The magnesium compound(s) employed in preparing the precursor composition has the structure

$$MgX_2$$

wherein

X is selected from the group consisting of Cl, Br, I, and mixtures thereof.

Suitable magnesium compounds include $MgCl_2$, $MgBr_2$ and $MgI_2$. Anhydrous $MgCl_2$ is particularly preferred.

The electron donor compound(s) employed in preparing the precursor composition is an organic compound which is liquid at 25°C and in which the titanium and magnesium compounds are soluble. The electron donor compounds are known as such, or as Lewis bases.

Suitable electron donor compounds include the alkyl esters of aliphatic and aromatic carboxylic acids, aliphatic ethers, cyclic ethers and aliphatic ketones. Among these electron donor compounds the preferable ones are alkyl esters of saturated aliphatic carboxylic acids containing from 1 to 4 carbon atoms; alkyl esters of aromatic carboxylic acids containing from 7 to 8 carbon atoms; aliphatic ethers containing from 2 to 8 carbon atoms, preferably from 4 to 5 carbon atoms; cyclic ethers containing from 4 to 5 carbon atoms, preferably mono- or di-ethers containing 4 carbon atoms, and aliphatic ketones containing from 3 to 6 carbon atoms, preferably from 3 to 4 carbon atoms. The most preferred of these electron donor compounds include methyl formate, ethyl acetate, butyl acetate, ethyl ether, tetrahydrofuran, dioxane, acetone and methyl ethyl ketone.

After the precursor composition has been prepared it is diluted with an inert carrier material by (1) mechanically mixing or (2) impregnating such compositions into the carrier material.

Mechanical mixing of the inert carrier and precursor composition is effected by blending these materials together using conventional techniques. The blended mixture suitably contains from about 3 percent by weight to about 50 percent by weight of the precursor composition.

Impregnation of the inert carrier material with the precursor composition may be accomplished by dissolving the precursor composition in the electron donor compound, and then admixing the support with the dissolved precursor composition to impregnate the support. The solvent is then removed by drying at temperatures up to about 85°C.

The support may also be impregnated with the precursor composition by adding the support to a solution of the chemical raw materials used to form the precursor composition in the electron donor compound, without isolating the precursor composition from said solution. The excess electron donor compound is then removed by drying at temperatures up to about 85°C.

When thus made as disclosed above the blended or impregnated precursor composition has the formula

$$Mg_mTi(OR)_nX_p[ED]_q$$

wherein

R is an aliphatic or aromatic hydrocarbon radical containing from 1 to 14 carbon atoms, or COR' wherein R' is also an aliphatic or aromatic hydrocarbon radical containing from 1 to 14 carbon atoms,

X is selected from the group consisting of Cl, Br, I, and mixtures thereof,

ED is an electron donor compound,

m is 0.5 to 56, preferably 1.5 to 5,

n is 0, 1 or 2,

p is 2 to 116, preferably 6 to 14, and

q is 2 to 85, preferably 3 to 10.

Suitably, the impregnated carrier material contains from about 3 percent by weight to about 50 percent by weight, preferably from about 10 percent by weight to about 30 percent by weight, of the precursor composition.

The carrier materials employed to dilute the precursor composition are solid, particulate, porous materials which are inert to the other components of the catalyst composition, and to the other active components of the reaction system. These carrier materials include inorganic materials such as oxides of silicon and/or aluminum. The carrier materials are used in the form of dry powders having an average particle size of from about 10 µm to about 250 µm, preferably from about 20 µm to about 150 µm. These materials are also porous and have a surface area of at least 3 square meters per gram, and preferably at least 50 square meters per gram. Catalyst activity or productivity can apparently be improved by employing a silica support having average pore sizes of at least 80 Angstrom units, preferably at least 100 Angstrom units. The carrier material should be dry, that is, free of absorbed water. Drying of the carrier material can be effected by heating, e.g., at a temperature of at least 600°C when silica is employed as the support. Alternatively, when silica is employed, it may be dried at a temperature of at least 200°C and treated with about 1 weight percent to about 8 weight percent of one or more of the aluminum activator compounds described below. Modification of the support with an aluminum compound in this manner provides the catalyst composition with increased activity and also improves polymer particle morphology of the resulting ethylene copolymers. Other organometallic compounds, such as diethylzinc, may also be used to modify the support.

To be useful in producing ethylene copolymers, the precursor composition must be activated with a compound capable of transforming the titanium atoms in the precursor composition to a state which will cause ethylene to effectively copolymerize with higher alpha olefins. Such activation is effected by means of an organoaluminum compound having the structure

$$Al(R'')_dX'_eH_f$$

wherein

X' is Cl or OR''',

R'' and R''' are saturated hydrocarbon radicals containing from 1 to 14 carbon atoms, which radicals may be the same or different,

e is 0 to 1.5,

f is 0 or 1, and

d+e+f=3.

Such activator compounds can be employed individually or in combination thereof and include compounds such as $Al(C_2H_5)_3$, $Al(C_2H_5)_2Cl$, $Al_2(C_2H_5)_3Cl_3$, $Al(C_2H_5)_2H$, $Al(C_2H_5)_2(OC_2H_5)$, $Al(i\text{-}C_4H_9)_3$, $Al(i\text{-}C_4H_9)_2H$, $Al(C_6H_{13})_3$ and $Al(C_8H_{17})_3$.

If desired, the precursor composition may be partially activated before it is introduced into the polymerization reactor. However, any activation undertaken outside of the polymerization reactor should be limited to the addition of an amount of activator compound which does not raise the molar ratio of activator compound: electron donor in the precursor composition beyond 1.4:1. Preferably, when activation is effected outside the reactor in this manner, the activator compound is employed in an amount which will provide the precursor composition with an activator compound: electron donor molar ratio of from about 0.1:1 to about 1.0:1. Such partial activation is carried out in a hydrocarbon solvent slurry followed by drying of the resulting mixture, to remove the solvent, at temperatures of from about 20°C to about 80°C, preferably from about 50°C to about 70°C. The resulting product is a free-flowing solid particulate material which can be readily fed to the polymerization reactor where the activation is completed with additional activator compound which can be the same or a different compound.

Alternatively, when an impregnated precursor composition is employed, it may, if desired, be completely activated in the polymerization reactor without any prior activation outside of the reactor, in the manner described in EP—A—12,148.

The partially activated or totally unactivated precursor composition and the required amount of

activator compound necessary to complete activation of the precursor composition are preferably fed to the reactor through separate feed lines. The activator compound may be sprayed into the reactor in the form of a solution thereof in a hydrocarbon solvent such as isopentane, hexane, or mineral oil. This solution usually contains from about 2 weight percent to about 30 weight percent of the activator compound. The activator compound is added to the reactor in such amounts as to provide, in the reactor, a total aluminum:titanium molar ratio of from about 10:1 to about 400:1, preferably from about 25:1 to about 60:1.

In the continuous gas phase fluid bed process disclosed herein, discrete portions of the partially activated or totally unactivated precursor composition are continuously fed to the reactor with discrete portions of the activator compound needed to complete the activation of the partially activated or totally unactivated precursor composition, during the continuing polymerization process in order to replace active catalyst sites that are expended during the course of the reaction.

By operating under the polymerization conditions described herein it is possible to continuously polymerize ethylene in a fluidized bed with one or more higher alpha olefins containing from 3 to 8 carbon atoms, and optionally also with one or more dienes, to produce ethylene polymers having a density below 0.91 g/cm$^3$ and a 1% secant modulus below 140,000 kPa. By "continuously polymerize" as used herein is meant the capability of uninterrupted polymerization for weeks at a time, i.e., at least in excess of 168 hours, and usually in excess of 1000 hours without reactor fouling due to the production of large agglomerations of polymer.

The copolymers produced in accordance with the process of the present invention usually have a density of from 0.86 g/cm$^3$ to 0.90 g/cm$^3$ and a 1% secant modulus of from 600 kPa to 100,000 kPa. Such copolymers contain no more than 94 mol percent of polymerized ethylene and at least 6 mol percent of polymerized alpha olefin containing from 3 to 8 carbon atoms and, optionally, polymerized diene. When polymerized diene is present, the polymer contains from 0.01 mol percent to 10 mol percent of at least one such diene, from 6 mol percent to 55 mol percent of at least one polymerized alpha olefin containing from 3 to 8 carbon atoms, and from 35 mol percent to 94 mol percent of polymerized ethylene.

The molar ratios of propylene to ethylene which must be employed in the reaction mixture to produce copolymers having a given propylene content are illustrated in Table 1 below. When alpha olefins higher than propylene are employed, like results can be obtained with lower ratios of such higher alpha olefin to ethylene in the reaction mixture.

TABLE 1

| $C_3H_6/C_2H_4$ Ratio in reaction mixture | Mol % $C_3H_6$ in copolymer | Mol % $C_2H_4$ in copolymer |
|---|---|---|
| 0.7 | 6 | 94 |
| 1.5 | 12 | 88 |
| 3.0 | 25 | 75 |
| 6.0 | 50 | 50 |
| 8.0 | 62 | 38 |

The ethylene polymers produced in accordance with the process of the present invention have a standard or normal load melt index of from greater than 0 g/10 minutes to about 25.0 g/10 minutes, preferably of from about 0.2 g/10 minutes to about 4.0 g/10 minutes. Such polymers have a high load melt index (HLMI) of from greater than 0 g/10 minutes to about 1000 g/10 minutes. The melt index of a polymer varies inversely with its molecular weight and is a function of the polymerization temperature of the reaction, the density of the polymer, and the hydrogen/monomer ratio in the reaction system. Thus, the melt index is raised by increasing the polymerization temperature, by increasing the ratio of higher alpha olefin to ethylene in the reaction system, and/or by increasing the hydrogen/monomer ratio.

The ethylene polymers produced in accordance with the process of the present invention have a melt flow ratio (MFR) of from about 22 to about 40, preferably of from about 26 to about 35. Melt flow ratio is another means of indicating the molecular weight distribution ($M_w/M_n$) of a polymer. An MFR in the range of from about 22 to about 40 corresponds to a $M_w/M_n$ of from about 2.7 to about 6.5, and an MFR in the range of from about 26 to about 35 corresponds to a $M_w/M_n$ of from about 2.9 to about 4.8.

The ethylene polymers produced in accordance with the process of the present invention have a residual catalyst content, in terms of parts per million of titanium metal, or less than 10 parts per million (ppm) at a productivity level of at least 100,000 kg of polymer per kg of titanium. The copolymers are readily produced with such catalyst compositions at productivities of up to about 500,000 kg of polymer per kg of titanium.

The ethylene polymers produced in accordance with the process of the present invention are granular materials having an average particle size of the order of from about 0.254 to 1.78 mm (0.01 to 0.07 inches),

usually of from about 0.51 to 1.27 mm (0.02 to 0.05 inches) in diameter. The particle size is important for the purpose of readily fluidizing the polymer particles in the fluid bed reactor. These granular materials also contain no more than 4.0 percent of fine particles having a diameter of less than 0.005 inches.

The ethylene polymers produced in accordance with the process of the present invention have a bulk density of from about 256.5 to 497 kg/$m^3$ (16 to 31 pounds per cubic foot).

The following Examples are designed to illustrate the process of the present invention.

The properties of the polymers produced in the Examples was determined by the following test methods:

Density

ASTM D-1505. A plaque is made and conditioned for one hour at 100°C to approach equilibrium crystallinity. Measurement for density is then made in a density gradient column and density values are reported as grams/$cm^3$.

Melt Index (MI)

ASTM D-1238, Condition E. Measured at 190°C and reported as grams per 10 minutes.

Flow Index (HLMI)

ASTM D-1238, Condition F. Measured at 10 times the weight used in the melt index test above.

Melt Flow Ratio (MFR)

Ratio of flow index:melt index.

Productivity

A sample of the resin product is ashed, and the weight percent of ash is determined. Since the ash is essentially composed of the catalyst, the productivity is thus the pounds of polymer produced per pound of total catalyst consumed. The amount of Ti, Mg and halide in the ash are determined by elemental analysis.

Bulk density

ASTM D-1895, Method B. The resin is poured via 9.5 mm (3/8") diameter funnel into a 400 ml graduated cylinder to the 400 ml line without shaking the cylinder, and weighed by difference.

Average particle size

Calculated from sieve analysis data measured according to ASTM D-1921, Method A, using a 500 g sample. Calculations are based on weight fractions retained on the screens.

n-Hexane extractables

(FDA test used for polyethylene film intended for food contact applications). A 1290 $cm^2$ (200 square inch) sample of 38.1 μm (1.5 mil) gauge film is cut into strips measuring 2.54×15.24 cm (1"×6") and weighed to the nearest 0.1 mg. The strips are placed in a vessel and extracted with 300 ml. of *n*-hexane at 50±1°C for 2 hours. The extract is then decanted into tared culture dishes. After drying the extract in a vacuum desiccator the culture dish is weighed to the nearest 0.1 mg. The extractables, normalized with respect to the original sample weight, is then reported as the weight fraction of *n*-hexane extractables.

Molecular weight distribution, $M_w/M_n$

Gel permeation chromatography. Styrogel® column packing: (Pore size packing sequence is $10^6$, $10^4$, $10^3$, $10^2$, nm). Solvent is perchloroethylene at 117°C. Detection: infrared at 3.45 μm.

Melting point, °C

Melting point was determined on a 5—6 mil thick film sample using a duPont differential thermal analyzer. Model 990. The sample was rapidly heated under nitrogen to 150°C, held isothermally at this temperature for 5 minutes, cooled at a rate of 10°C/minute to 50°C, and then re-heated at a rate of 10°C/minute until the softening point was reached.

% Crystallinity

Crystallinity was determined by x-ray diffraction using a Norelco® XRG-500 X-ray diffractometer with copper $K_\alpha$ radiation. Crystallinity was calculated from the integrated intensity of the (020) reflection.

1% Secant modulus

ASTM D-638. Film strips 25.4×1.27 cm (10"×0.5") are clamped at a 12.7 cm (5 inch) gauge length and deformed at a jaw separation rate of 0.51 cm (0.2 in)/min. A force elongation trace is determined. Secant modulus is the slope of a line drawn from the origin to the load at 1% deformation. Deformation is determined by crosshead position. Normalizing by the specimen's undeformed cross-sectional area, secant modulus is reported in kPa.

Tensile strength and elongation

ASTM D-638. Film strips 2.54×12.7 cm (1″×5″) are clamped at a 5.08 cm (2 inch) gauge length and deformed at a jaw separation rate of 50.8 cm (20 in)/min. Tensile strength is the engineering stress developed at break. Elongation at break is measured by following the deformation of 2.54 cm (1″) gauge marks placed on the film sample and is reported in percent.

Example 1

Impregnation of support with precursor

(a) In a 12 liter flask equipped with a mechanical stirrer were placed 41.8 g (0.439 mol) of anhydrous $MgCl_2$ and 2.5 liters of tetrahydrofuran (THF). To this mixture, 27.7 g (0.146 mol) of $TiCl_4$ were added dropwise over a 1/2 hour period. The mixture was then heated at 60°C for another 1/2 hour in order to completely dissolve the material.

Five hundred grams (500 g) of silica was dehydrated by heating at a temperature of 600°C and slurried in 3 liters of isopentane. The slurry was stirred while 186 ml of a 20 percent by weight solution of triethylaluminum in hexane was added thereto over a 1/4 hour period. The resulting mixture was then dried under a nitrogen purge at 60°C over a period of about 4 hours to provide a dry, free-flowing powder containing 5.5 percent by weight of the aluminum alkyl.

The treated silica was then added to the solution prepared as above. The resulting slurry was stirred for 1/4 hour and then dried under a nitrogen purge at 60°C over a period of about 4 hours to provide a dry, impregnated, free-flowing powder.

(b) The procedure was repeated employing 29.0 g (0.146 mol) of $TiCl_3 \cdot 0.33\ AlCl_3$ in place of $TiCl_4$.

Example 2

Preparation of partially activated precursor

(a) The silica-impregnated precursor composition prepared in accordance with Example 1(a) was slurried in 3 liters of anhydrous isopentane and stirred while a 20 percent by weight solution of diethylaluminum chloride in anhydrous hexane was added thereto over a 1/4 hour period. The diethylaluminum chloride solution was employed in an amount sufficient to provide 0.4 mols of this compound per mol of tetrahydrofuran in the precursor. After addition of the diethylaluminum chloride was completed, stirring was continued for an additional 1/4 to 1/2 hour while a 20 percent by weight solution of tri-*n*-hexylaluminum in anhydrous hexane was added in an amount sufficient to provide 0.6 mols of this compound per mol of tetrahydrofuran in the precursor. The mixture was then dried under a nitrogen purge at a temperature of 65±10°C over a period of about 4 hours to provide a dry, free-flowing powder. This material was stored under dry nitrogen until it was needed.

(b) The silica-impregnated precursor composition prepared in accordance with Example 1(b) was partially activated with diethylaluminum chloride and tri-*n*-hexylaluminum employing the same procedure as in 2(a) except that the tri-*n*-hexylaluminum was employed in an amount sufficient to provide 0.4 mols of this compound per mol of tetrahydrofuran in the precursor.

(c) The silica-impregnated precursor composition prepared in accordance with Example 1(b) was partially activated with diethylaluminum chloride and tri-*n*-hexylaluminum employing the same procedure as in 2(a) except that each compound was employed in an amount sufficient to provide 0.3 mols of such compound per mol of tetrahydrofuran in the precursor.

Examples 3—4

Ethylene was copolymerized with butene-1 under varying reaction conditions in a fluid bed reactor system similar to the one described and illustrated in US—A—4,302,565 and 4,302,566. The polymerization reactor had a lower section 3.05 m (10 feet) high and 34.29 cm (13-1/2 inches) in diameter, and an upper section 16 feet high and 59.69 (23-1/2 inches) in diameter.

In each polymerization, silica-impregnated precursor composition prepared in accordance with Example 1(a) and partially activated in accordance with Example 2(a) was fed to the polymerization reactor along with a 5 percent solution of triethylaluminum in isopentane so as to provide a completely activated catalyst in the reactor having an aluminum:titanium molar ratio of from 15:1 to 55:1.

Table 2 below summarizes the reaction conditions employed in each polymerization, the properties of the polymers produced by such polymerizations, and the productivity of the catalyst system employed in terms of residual titanium in the copolymer.

TABLE 2

| Example | 3 | 4 |
|---|---|---|
| Polymerization conditions | | |
| Temperature, °C | 55 | 55 |
| Pressure, kPa | 2068 | 2068 |
| Gas velocity, (ft/sec) m/sec | (2.2) 0.67 | (2.2) 0.67 |
| Space-time yield (lbs/h/ft$^3$) kg/h/m$^3$ | (5.3) 84.89 | (4.5) 72.08 |
| Butene/ethylene mol ratio | 0.75 | 0.91 |
| Hydrogen/ethylene mol ratio | 0.25 | 0.21 |
| Mol % $N_2$ in reaction mixture | 41 | 52 |
| Mol % $H_2$ in reaction mixture | 6.4 | 4.7 |
| Molar ratio Al:Ti in completely activated catalyst | 50 | 46 |
| Polymer properties | | |
| Density, g/cm$^3$ | 0.900 | 0.898 |
| Melt index, g/10 min | 1.2 | 1.2 |
| Flow index, g/10 min | 33.3 | 36.7 |
| Melt flow ratio | 27.5 | 30.8 |
| Bulk density, (lbs/ft$^3$) kg/m$^3$ | (20.5) 328.4 | (18.8) 301.2 |
| Average particle size, (in) mm | (0.03) 0.76 | (0.03) 0.76 |
| *n*-Hexane extractables, % | 9.8 | 14.3 |
| Mol wt distribution, $M_w/M_n$ | 4.8 | 4.4 |
| Melting point, °C | 120.8 | 117.4 |
| % Crystallinity | 32.4 | 19.0 |
| 1% Secant modulus, kPa | 90,738 | 69,047 |
| Tensile strength, kPa | 19,906 | 16,720 |
| Elongation, % | 1,009 | 918 |
| Productivity | | |
| ppm Ti in copolymer | 4.6 | 6.1 |

It is noted that when the reaction temperature in Example 4 was increased to 65°C, reactor fouling occurred due to particle agglomeration forcing a halt to polymerization.

Examples 5—6

Ethylene was copolymerized with propylene under varying reaction conditions employing the same fluid bed reactor system and catalyst system employed in Examples 3—4.

Table 3 below summarizes the reaction conditions employed in each polymerization, and the properties of the polymers produced by such polymerizations.

TABLE 3

| Example | 5 | 6 |
|---|---|---|
| Polymerization conditions | | |
| Temperature, °C | 58 | 57 |
| Pressure, kPa | 2068 | 2068 |
| Gas velocity, (ft/sec) m/sec | (1.9) 0.58 | (1.9) 0.58 |
| Space-time yield (lbs/h/$ft^3$) kg/h/$m^3$ | (4.4) 70.47 | (2.8) 44.85 |
| Propylene/ethylene mol ratio | 1.0 | 1.5 |
| Hydrogen/ethylene mol ratio | 0.18 | 0.24 |
| Mol % $N_2$ in reaction mixture | 39 | 46 |
| Mol % $H_2$ in reaction mixture | 5.1 | 4.8 |
| Molar ratio Al:Ti in completely activated catalyst | — | 17 |
| Polymer properties | | |
| Density, g/$cm^3$ | 0.899 | 0.898 |
| Melt index, g/10 min | 1.1 | 1.1 |
| Flow index, g/10 min | 39.0 | — |
| Melt flow ratio | 31.4 | — |
| Bulk density, (lbs/$ft^3$) kg/$m^3$ | (21.8) 349.2 | (18.2) 291.6 |
| Average particle size, (in) mm | (0.02) 0.51 | (0.03) 0.76 |
| *n*-Hexane extractables, % | 9.3 | 15.1 |
| Mol wt distribution, $M_w/M_n$ | 4.3 | 4.2 |
| Melting point, °C | 114.8 | 104.4 |
| % Crystallinity | 16.0 | 18.3 |
| 1% Secant modulus, kPa | 99,591 | 57,217 |
| Tensile strength, kPa | 13,225 | 9,653 |
| Elongation, % | 927 | 973 |

It is noted that when operating at substantially the same conditions as in Example 6, but employing a reaction mixture containing 36 mol percent nitrogen and a reaction temperature of 65°C, reactor fouling occurred due to particle agglomeration forcing a halt to polymerization.

Examples 7—8

Ethylene was copolymerized with propylene under varying reaction conditions employing the same fluid bed reactor system employed in Examples 3—4.

In each polymerization, silica-impregnated precursor composition prepared in accordance with Example 1(b) and partially activated in accordance with Example 2(b) was fed to the polymerization reactor along with a 5 percent solution of triethylaluminum in isopentane so as to provide a completely activated catalyst in the reactor having an aluminum:titanium molar ratio of from 40:1 to 55:1.

Table 4 below summarizes the reaction conditions employed in each polymerization, the properties of the polymers produced by such polymerizations, and the productivity of the catalyst system employed in terms of residual titanium in the copolymer.

TABLE 4

| Example | 7 | 8 |
|---|---|---|
| Polymerization conditions | | |
| Temperature, °C | 55 | 35 |
| Pressure, kPa | 2068 | 2068 |
| Gas velocity, (ft/sec) m/sec | (2.3) 0.70 | (2.3) 0.70 |
| Space-time yield ($lbs/h/ft^3$) $kg/h/m^3$ | (4.5) 72.08 | (4.8) 76.88 |
| Propylene/ethylene mol ratio | 1.1 | 1.0 |
| Hydrogen/ethylene mol ratio | 0.14 | 0.21 |
| Mol % $N_2$ in reaction mixture | 52.5 | 63 |
| Mol % $H_2$ in reaction mixture | 3.0 | 3.5 |
| Molar ratio Al:Ti in completely activated catalyst | 50 | 51 |
| Polymer properties | | |
| Density, $g/cm^3$ | 0.895 | 0.885 |
| Melt index, g/10 min | 1.6 | 0.9 |
| Flow index, g/10 min | 52.6 | 32.9 |
| Melt flow ratio | 32.9 | 36.6 |
| Bulk density, ($lbs/ft^3$) $kg/m^3$ | (17.8) 285.2 | (24.2) 387.7 |
| Average particle size, (in) mm | (0.06) 1.52 | (0.04) 1.02 |
| *n*-Hexane extractables, % | 23.2 | 28.9 |
| Melting point, °C | 77.7 | — |
| % Crystallinity | 17.2 | — |
| 1% Secant modulus, kPa | 29,662 | 24,346 |
| Tensile strength, kPa | 3,095 | 5,900 |
| Elongation, % | 456 | 870 |
| Productivity | | |
| ppm Ti in copolymer | 4.6 | 5.9 |

It is noted that it would not be possible to copolymerize ethylene and butylene under the conditions employed in Example 8. The reason for this is that the dew point of the reaction mixture would exceed the temperature of the bed.

It is also noted that when the ratio of propylene to ethylene in Example 8 was increased to 1.9, reactor fouling occurred due to particle agglomeration forcing a halt to polymerization.

Example 9

Ethylene was copolymerized with propylene and ethylidene norbornene employing the same fluid bed reactor system employed in Examples 3—4.

In this polymerization, silica-impregnated precursor composition prepared in accordance with

Example 1(b) and partially activated in accordance with Example 2(c) was fed to the polymerization reactor along with a 5 percent solution of triethylaluminum in isopentane so as to provide a completely activated catalyst in the reactor having an aluminum:titanium molar ratio of 24:1.

Table 5 below summarizes the reaction conditions employed in the polymerization, and the properties of the polymer produced by such polymerization.

TABLE 5

| Example | 9 |
|---|---|
| Polymerization conditions | |
| Temperature, °C | 50 |
| Pressure, kPa | 2075 |
| Gas velocity, (ft/sec) m/sec | (1.5) 0.46 |
| Space-time yield (lbs/h/ft$^3$) kg/h/m$^3$ | (1.5) 24.03 |
| Propylene/ethylene mol ratio | 0.91 |
| Hydrogen/ethylene mol ratio | 0.23 |
| Mol % $N_2$ in reaction mixture | 55.7 |
| Mol % $H_2$ in reaction mixture | 4.7 |
| Mol % ethylidene norbornene in reaction mixture | 4.3 |
| Polymer properties | |
| Density, g/cm$^3$ | 0.902 |
| Ethylidene norbornene content, mol % | 2.3 |
| Melt index, g/10 min | 2.0 |
| Flow index, g/10 min | 74 |
| Melt flow ratio | 37 |
| Bulk density, (lbs/ft$^3$) kg/m$^3$ | (19.4) 310.8 |
| Average particle size, (in) mm | (0.02) 0.51 |
| 1% Secant modulus, kPa | 93,772 |
| Tensile strength, kPa | 5,026 |
| Elongation, % | 948 |

**Claims**

1. A continuous process for producing ethylene copolymers having a density of less than 0.91 g/cm$^3$ and a 1% secant modulus of less than 140,000 kPa in a fluidized bed without particle agglomeration, said copolymers containing no more than 94 mol percent of polymerized ethylene and at least 6 mol percent of polymerized alpha olefin containing from 3 to 8 carbon atoms, which comprises continuously contacting, in a fluidized bed reaction zone, at a temperature of from 10°C up to 80°C and a pressure no greater than 7000 kPa, a gaseous mixture containing (a) ethylene and at least one higher alpha olefin containing from 3 to 8 carbon atoms, in a molar ratio of such higher alpha olefin to ethylene of from 0.35:1 to 8.0:1, and (b) at least 25 mol percent of at least one diluent gas, with particles of a catalyst system comprising a precursor composition having the formula

$$Mg_mTi(OR)_nX_p[ED]_q$$

wherein

R is an aliphatic or aromatic hydrocarbon radical containing from 1 to 14 carbon atoms, or COR' wherein R' is an aliphatic or aromatic hydrocarbon radical containing from 1 to 14 carbon atoms,

X is selected from the group consisting of Cl, Br, I, and mixtures thereof.

ED is an organic electron donor compound selected from the group consisting of alkyl esters of aliphatic and aromatic acids, aliphatic ethers, cyclic ethers and aliphatic ketones,

m is 0.5 to 56,

n is 0, 1 or 2,

p is 2 to 116, and

q is 2 to 85,

said precursor composition being diluted with an inert carrier material and completely activated with an organoaluminum compound having the formula

$$Al(R'')_dX'_eH_f$$

wherein

X' is Cl or OR'''.

R'' and R''' are saturated hydrocarbon radicals containing from 1 to 14 carbon atoms,

e is 0 to 1.5,

f is 0 or 1, and

$d+e+f=3$,

said activator compound being employed in an amount such as to provide a total aluminum:titanium molar ratio in said reaction zone from 10:1 to 400:1.

2. A process as in claim 1 wherein said precursor composition is mechanically mixed with the inert carrier material and the blended mixture contains from 3 percent by weight to 50 percent by weight of the precursor composition.

3. A process as in Claim 1 wherein the inert carrier material is impregnated with the precursor composition and the impregnated carrier material contains from 3 percent by weight to 50 percent by weight of the precursor composition.

4. A process as in any of claims 1 to 3 wherein the inert carrier material is silica.

5. A process as in any of claims 1 to 4 wherein the gaseous mixture contains hydrogen in an amount sufficient to produce a hydrogen to ethylene mol ratio of from 0.01:1 to 0.5:1.

6. A process as in any of claims 1 to 5 wherein the gaseous mixture contains from 33 mol percent to 95 mol percent of diluent gas, and the higher alpha olefin and ethylene are present in the mixture in a molar ratio of higher alpha olefin to ethylene of from 0.6:1 to 7.0:1.

7. A process as in any of claims 1 to 6 wherein the gaseous mixture contains from 0.1 mol percent to 10 mol percent of at least one diene.

8. A process as in claim 7 wherein the diene is ethylidene norbornene.

9. A process as in any one of claims 1 to 8 wherein X and X' are Cl, [ED] is tetrahydrofuran, n is 0, m is 1.5 to 5, p is 6 to 14, and q is 3 to 10.

10. A process as in any one of claims 1 to 9 wherein the precursor composition is composed of magnesium chloride, titanium trichloride, and tetrahydrofuran.

11. A process as in any one of claims 1 to 9 wherein the precursor composition is composed of magnesium chloride, titanium tetrachloride, and tetrahydrofuran.

12. A process as in any one of claims 1 to 11 wherein the higher alpha olefin is propylene or butene-1.

13. A process as in any one of claims 1 to 12 wherein the gaseous mixture contains nitrogen.

**Patentansprüche**

1. Kontinuierliches Verfahren zur Herstellung von Ethylen-Copolymeren mit einer Dichte von weniger als 0,91 g/cm$^3$ und einem 1%-Sekanten-Modul von weniger als 140000 kPa in einem Fließbett ohne Teilchenagglomeration, wobei die Copolymeren nicht mehr als 94 Molprozent polymerisiertes Ethylen und mindestens 6 Molprozent polymerisiertes α-Olefin mit 3 bis 8 Kohlenstoffatomen enthalten, welches umfaßt den kontinuierlichen Kontakt in einer Fließbett-Reaktionszone bei einer Temperatur von 10°C bis zu 80°C und einem Druck von nicht mehr als 7000 kPa eines gasförmigen Gemisches, das (a) Ethylen und mindestens ein höheres α-Olefin mit 3 bis 8 Kohlenstoffatomen in einem Molverhältnis des höheren α-Olefins zu Ethylen von 0,35:1 bis 8,0:1 enthält, und (b) mindestens 25 Molprozent mindestens eines Verdünnungsgases enthält, mit Teilchen eines Katalysatorsystems, umfassend eine Precursor-Zusammensetzung der Formel

$$Mg_mTi(OR)_nX_p[ED]_q$$

worin R ein aliphatischer oder aromatischer Kohlenwasserstoffrest mit 1 bis 14 Kohlenstoffatomen oder COR' ist, worin R' ein aliphatischer oder aromatischer Kohlenwasserstoffrest mit 1 bis 14 Kohlenstoffatomen ist, X ausgewählt ist aus der Gruppe, bestehend aus Cl, Br, I und Mischungen davon, ED eine organische Elektronendonor-Verbindung ist, ausgewählt aus der Gruppe, bestehend aus Alkylestern

von aliphatischen und aromatischen Säuren, aliphatischen Ethern, cyclischen Ethern und aliphatischen Ketonen,

m 0,5 bis 56 ist,

n 0, 1 oder 2 ist,

p 2 bis 116 ist und

q 2 bis 85 ist,

wobei die Precursor-Zusammensetzung mit einer inerten Trägermaterial verdünnt und vollständig aktiviert ist mit einer Organoaluminiumverbindung der Formel

$$Al(R'')_dX'_eH_f$$

worin X' Cl oder OR''' ist, R'' und R''' gesättigte Kohlenwasserstoffreste mit 1 bis 14 Kohlenstoffatomen sind,

e 0 bis 1,5 ist,

f 0 oder 1 ist und

d+e+f=3,

wobei die Aktivator-Verbindung in einer derartigen Menge verwendet wird, daß das Gesamt-Aluminium:Titan-Molverhältnis in der Reaktionszone 10:1 bis 400:1 beträgt.

2. Verfahren nach Anspruch 1, worin die Precursor-Zusammensetzung mit dem inerten Trägermaterial mechanisch vermischt ist und die Mischung 3 bis 50 Gewichtsprozent der Precursor-Zusammensetzung enthält.

3. Verfahren nach Anspruch 1, worin das inerte Trägermaterial mit der Precursor-Zusammensetzung imprägniert ist und das imprägnierte Trägermaterial 3 bis 50 Gewichtsprozent der Precursor-Zusammensetzung enthält.

4. Verfahren nach irgendeinem der Ansprüche 1 bis 3, worin das inerte Trägermaterial Siliciumdioxid ist.

5. Verfahren nach irgendeinem der Ansprüche 1 bis 4, worin das gasförmige Gemisch Wsserstoff in einer ausreichenden Menge enthält, um ein Wasserstoff:Ethylen-Molverhältnis von 0,01:1 bis 0,5:1 zu ergeben.

6. Verfahren nach irgendeinem der Ansprüche 1 bis 5, worin das gasförmige Gemisch 33 bis 95 Molprozent Verdünnungsgas enthält und das höhere α-Olefin und Ethylen in der Mischung in einem Molverhältnis von höherem α-Olefin zu Ethylen von 0,6:1 bis 7,0:1 vorhanden sind.

7. Verfahren nach irgendeinem der Ansprüche 1 bis 6, worin das gasförmige Gemisch 0,1 bis 10 Molprozent mindestens eines Diens enthält.

8. Verfahren nach Anspruch 7, worin das Dien Ethylidennorbornen ist.

9. Verfahren nach irgendeinem der Ansprüche 1 bis 8, worin X un X' Cl sind, [ED] Tetrahydrofuran ist, n 0 ist, m 1,5 bis 5 ist, p 6 bis 14 ist und q 3 bis 10 ist.

10. Verfahren nach irgendeinem der Ansprüche 1 bis 9, worin die Precursor-Zusammensetzung aus Magnesiumchlorid, Titantrichlorid und Tetrahydrofuran besteht.

11. Verfahren nach irgendeinem der Ansprüche 1 bis 9, worin die Precursor-Zusammensetzung aus Magnesiumchlorid, Titantetrachlorid und Tetrahydrofuran besteht.

12. Verfahren nach irgendeinem der Ansprüche 1 bis 11, worin das höhere α-Olefin Propylen oder Buten-1 ist.

13. Verfahren nach irgendeinem der Ansprüche 1 bis 12, worin das gasförmige Gemisch Stickstoff enthält.

**Revendications**

1. Procédé continu de production de copolymères d'éthylène ayant une masse volumique inférieure à 0,91 g/cm$^3$ et un module sécant à 1% de moins de 140 000 kPa dans un lit fluidisé sans agglomération de particules, lesdits copolymères ne contenant pas plus de 94 moles % d'éthylène polymérisé et au moins 6 moles % d'alpha-oléfine polymérisée de 3 à 8 atomes de carbone, qui implique la mise en contact continue, dans une zone de réaction à lit fluidisé, à une température allant de 10°C à 80°C et à une pression ne dépassant pas 7000 kPa, d'un mélange gazeux contenant (a) de l'éthylène et au moins une alpha-oléfine supérieure comprenant 3 à 8 atomes de carbone, dans un rapport molaire de l'alpha-oléfine supérieure à l'éthylène de 0,35:1 à 8,0:1 et (b) au moins 25 moles % d'au moins un gaz de dilution, avec des particules d'un système catalyseur comprenant une composition de précurseur répondant à la formule

$$Mg_mTi(OR)_nX_p[DE]_q$$

dans laquelle R est un radical d'hydrocarbure aliphatique ou aromatique contenant 1 à 14 atomes de carbone ou un groupe COR' dans lequel R' est un radical d'hydrocarbure aliphatique ou aromatique contenant 1 à 14 atomes de carbone,

X est choisi dans le groupe comprenant Cl, Br, I et leurs mélanges,

DE est un composé organique donneur d'électrons choisi dans le groupe comprenant des esters

alkyliques d'acides aliphatiques et aromatiques, des éthers aliphatiques, des éthers cycliques et des cétones aliphatiques,

*m* a une valeur de 0,5 à 56,

*n* a la valeur 0, 1 ou 2,

*p* a une valeur de 2 à 116, et

*q* a une valeur de 2 à 85,

ladite composite de précurseur étant diluée avec un support inerte et étant complètement activée avec un composé organique d'aluminium répondant à la formule

$$Al(R'')_d X'_e H_f$$

dans laquelle X' représente Cl ou un groupe OR''',

R'' et R''' sont des radicaux d'hydrocarbures saturés contenant 1 à 14 atomes de carbone,

*e* a une valeur de 0 à 1,5,

*f* a la valeur 0 ou 1, et

la somme d+e+f est égale à 3,

ledit composé activateur étant utilisé en une quantité choisie de manière à établir un rapport molaire total de l'aluminium au titane dans ladite zone de réaction de 10:1 à 400:1.

2. Procédé suivant la revendication 1, dans lequel ladite composition de précurseur est mélangée mécaniquement avec la matière de support inerte et le mélange obtenu contient 3 à 50% en poids de la composition de précurseur.

3. Procédé suivant la revendication 1, dans lequel la matière de support inerte est imprégnée de la composition de précurseur et la matière de support imprégnée contient 3 à 50% en poids de la composition de précurseur.

4. Procédé suivant l'une quelconque des revendications 1 à 3, dans lequel la matière de support inerte est la silice.

5. Procédé suivant l'une quelconque des revendications 1 à 4, dans lequel le mélange gazeux contient de l'hydrogène en une quantité suffisante pour établir un rapport molaire de l'hydrogène à l'éthylène de 0,01:1 à 0,5:1.

6. Procédé suivant l'une quelconque des revendications 1 à 5, dans lequel le mélange gazeux contient 33 à 95 moles % de gaz de dilution et l'alpha-oléfine supérieure et l'éthylène sont présents dans le mélange dans un rapport molaire de l'alpha-oléfine supérieure à l'éthylène de 0,6:1 à 7,0:1.

7. Procédé suivant l'une quelconque des revendications 1 à 6, dans lequel le mélange gazeux contient 0,1 à 10 moles % d'au moins un diène.

8. Procédé suivant la revendication 7, dans lequel le diène est l'éthylidène-norbornène.

9. Procédé suivant l'une quelconque des revendications 1 à 8, dans lequel X et X' représentent Cl, [DE] est le tétrahydrofuranne, *n* est égal à 0, *m* a une valeur de 1,5 à 5, *p* a une valeur de 6 à 14 et *q* a une valeur de 3 à 10.

10. Procédé suivant l'une quelconque des revendications 1 à 9, dans lequel la composition de précurseur est formée de chlorure de magnésium, de trichlorure de titane et de tétrahydrofuranne.

11. Procédé suivant l'une quelconque des revendications 1 à 9, dans lequel la composition de précurseur est formée de chlorure de magnésium, de tétrachlorure de titane et de tétrahydrofuranne.

12. Procédé suivant l'une quelconque des revendications 1 à 11, dans lequel l'alpha-oléfine supérieure est le propylène ou le butène-1.

13. Procédé suivant l'une quelconque des revendications 1 à 12, dans lequel le mélange gazeux contient de l'azote.

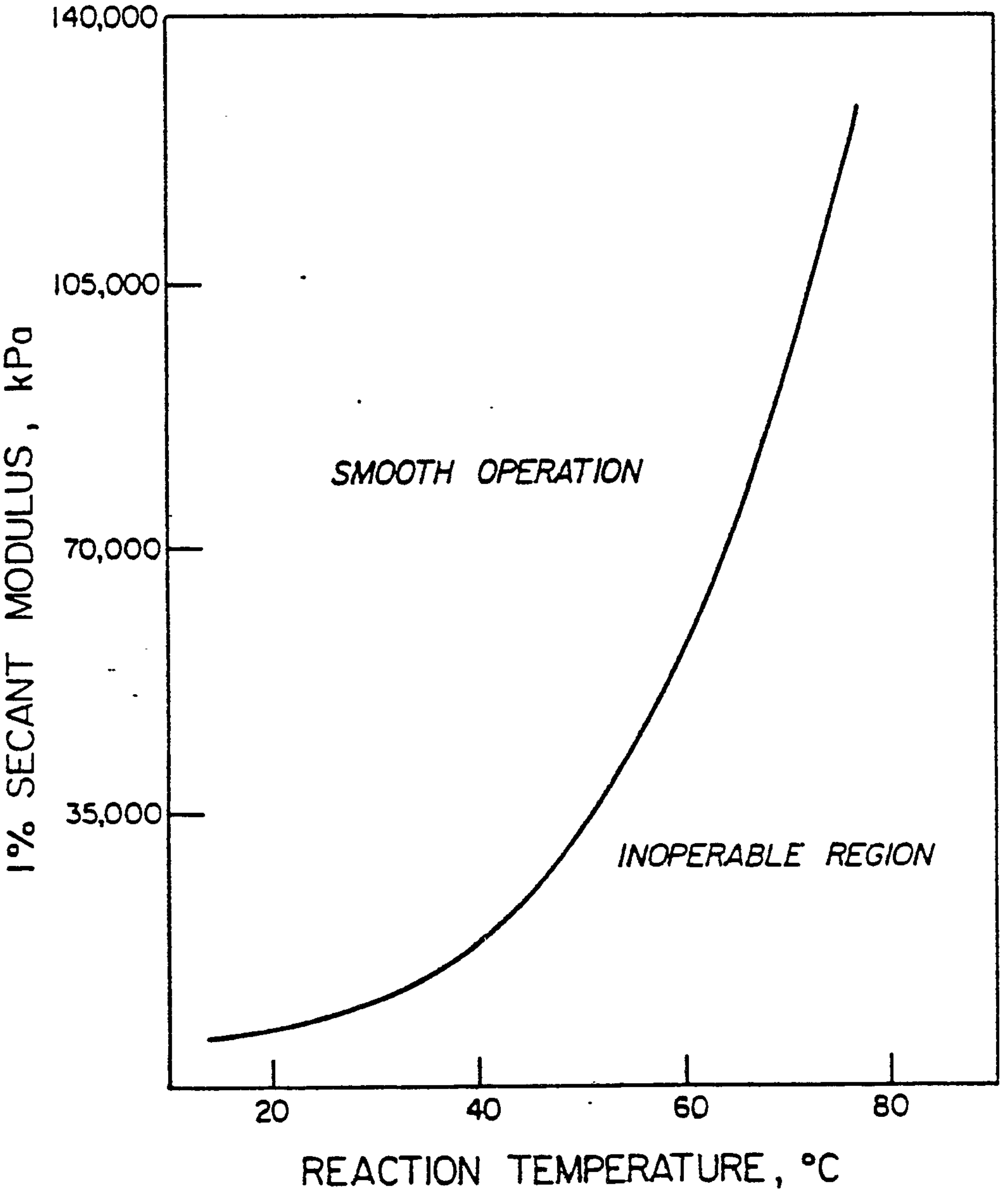
140,000
105,000
70,000
35,000
1% SECANT MODULUS, kPa
SMOOTH OPERATION
INOPERABLE REGION
20
40
60
80
REACTION TEMPERATURE, °C